(19) Europäisches Patentamt
European Patent Office
Office européen des brevets

(11) **EP 2 554 375 B1**

(12) **EUROPEAN PATENT SPECIFICATION**

(45) Date of publication and mention of the grant of the patent:
**09.04.2014 Bulletin 2014/15**

(51) Int Cl.:
***B32B 27/32*** *(2006.01)*

(21) Application number: **11176472.6**

(22) Date of filing: **03.08.2011**

(54) **Film**

Film

Film

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.02.2013 Bulletin 2013/06**

(73) Proprietor: **Borealis AG**
**1220 Vienna (AT)**

(72) Inventor: **Niedersuess, Peter**
**4312 Ried/Riedmark (AT)**

(74) Representative: **Campbell, Neil Boyd**
**Dehns**
**St Bride's House**
**10 Salisbury Square**
**London**
**EC4Y 8JD (GB)**

(56) References cited:
**EP-A1- 1 488 924       EP-A1- 1 683 631**
**US-A1- 2009 208 718**

• **DATABASE WPI Week 200527 Thomson Scientific, London, GB; AN 2005-257351 XP002661464, -& JP 2005 081680 A (MEIWA PACKS KK) 31 March 2005 (2005-03-31)**
• **DATABASE WPI Week 200551 Thomson Scientific, London, GB; AN 2005-500731 XP002661465, & JP 2005 178244 A (MEIWA PACKS KK) 7 July 2005 (2005-07-07)**

## Description

This invention relates to multilayer blown polyolefin films which are designed not to curl as well as processes for their manufacture and the use thereof in industrial applications such as food packaging. In particular, the films of the invention comprise separate polypropylene and polyethylene outer layers to provide sealing and mechanical strength respectively.

During the manufacture of blown films, polymer melts are typically heated and coextruded to form the desired film layers. As the film cools, it is inevitable that the polymer melt shrinks slightly. If one layer of a polymer film shrinks at a different rate to another layer of that film, it will be appreciated that the film will curl. Curling is a problem for the film manufacturer.

Most conventional polymer films of use today are symmetrical. The outer layers of the films are typically identical and these sandwich a core layer. As the outer layers are identical such films do not exhibit curling as the shrinkage of the outer layers on cooling is identical. Both layers "pull" the core layer the same amount and in opposite directions thus cancelling each other out.

The present invention concerns asymmetric films. Asymmetric films are important as these can be provided with a single sealing layer on one side of the film. The other outer layer can be one which provides mechanical strength to the film and possibly advantageous optical properties to the film and so on. There is rarely value to having two outer sealing layers as in most circumstances, it is only one layer which is sealed. It will be appreciated therefore, that the films described above must be asymmetrical as the outer layers differ.

Unlike symmetrical films therefore, there is a serious problem that the shrinkage of the outer layers in such a film is not the same. If one layer shrinks faster than another on cooling it is inevitable that the films curls. The curling can be so bad, that the film wraps completely up on itself to form a cylinder. Such films are of no commercial interest.

The problem of curling is particularly acute with films comprising polypropylene and polyethylene layers as these have different shrinkage properties owing to their rather different melting points. Asymmetric coextruded polymer films with, for example, a polypropylene outer layer and a polyethylene sealing layer normally exhibit a high degree of curling. This can also be attributed in part to the density difference between the two layers.

In order to avoid curling, there are various known solutions. Where a film structure is produced using cast film technology this problem can be overcome by proving the polyethylene layer on the chill roll side. The present invention, however, concerns the much more valuable blown film where this solution is not available.

In blown film, curling can be reduced by manipulation of the layer distribution, in particular, by employing a very thin polyethylene layer but this solution means the sealing layer is unfit for purpose. If the sealing layer (polyethylene layer) is too thin, it forms weak seals. A further alternative involves blending polypropylene and polyethylene in one layer of the film to try to harmonise the shrinkage properties but these materials are inherently incompatible leading to different film properties, poor sealing behaviour and higher haze.

There remains therefore a need to provide asymmetric polymer films comprising polyethylene and polypropylene in separate layers which resist curling. Typically these asymmetric coextruded blown films are used for packaging applications such as lidding films, where high stiffness and heat resistance of polypropylene is needed on one side of the film and good sealing of polyethylene on the other side. As these films are, more often than not, manufactured using blown film technology they often show extremely high curling.

The present inventors have found that a particular combination of film layers allows the formation of multilayer films, using blown film technology, which resist curling.

## Summary of Invention

Viewed from one aspect the invention provides an asymmetric blown multilayer film comprising at least two layers, an outer polypropylene containing layer and an outer sealing layer;
said outer polypropylene layer comprising at least one polypropylene random copolymer;
said sealing layer comprising at least one LLDPE having an $MFR_2$ of at least 2 g/10min;
wherein at least 18% of total thickness of the film derives from the sealing layer.

Viewed from another aspect the invention provides a process for the preparation of a film as hereinbefore defined comprising coextruding and then blowing at least one polypropylene random copolymer so as to form an outer polypropylene layer; and
at least one LLDPE having an $MFR_2$ of at least 2 g/10min so as to form an outer sealing layer;
wherein at least 18% of total thickness of the film derives from the sealing layer.

Viewed from another aspect the invention provides the use of a film as hereinbefore defined in packaging, such as food or medical packaging.

**Definitions**

The term asymmetric film is used here to stress that the outer layers of the film are different. Both the sealing layer and the polypropylene layer must be outer layers in the invention and these layers cannot be the same.

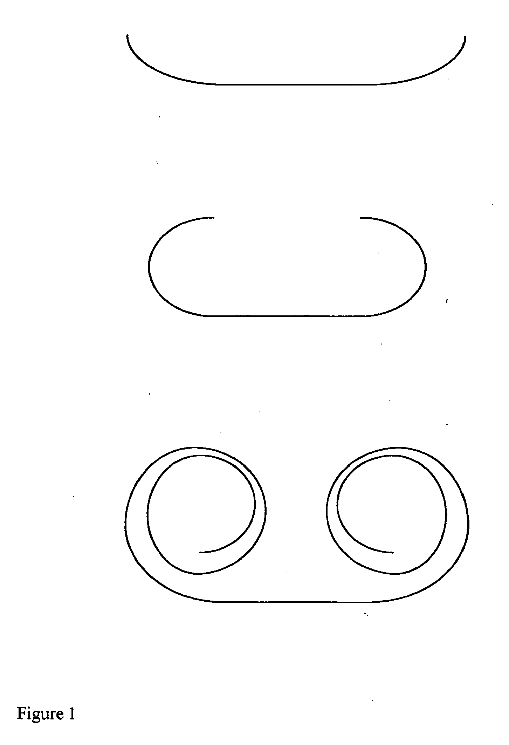

In general, the invention defines a film which resists curling as one whose width is 75% or more of the projected width of the film based on the extrusion conditions, preferably 80% or more, such as 85% or more. The width of a curling film is always measured to its widest point. Theoretical curling films are shown in figure 1.

Figure 1 shows a side view of a curling film. The curling test procedure is outlined in the tests section below and is measured looking down on the film from above and observing the curl by determining the reduction in width that occurs.

**Detailed Description of the Invention**

**Polypropylene layer**

The films of the invention comprise an outer polypropylene layer which comprises at least one random polypropylene copolymer. It is stressed therefore that this layer must be an outside layer in the invention. It cannot be a core layer sandwiched by the sealing layer and another layer. Polypropylene polymers of the invention contain at least 50 wt% propylene.

The comonomer in the polypropylene random copolymer can be ethylene or a C4-10 alpha olefin such as 1-butene. It is possible for there to be one comonomer or more than one comonomer such as two comonomers (thus forming a terpolymer). Preferably there is only one comonomer present. More preferably, the comonomer is ethylene. It is especially preferred if ethylene is the only comonomer present in the random polypropylene copolymer.

The comonomer distribution within the polypropylene is random, i.e. it does not comprise blocks of repeating units rather the comonomer is arranged randomly within the polymer backbone. The polymer can however be a unimodal random polypropylene or a multimodal random polypropylene copolymer such as a random heterophasic polypropylene copolymer.

The comonomer content in the polypropylene random copolymer is preferably in the range of 1 to 15 wt%, such as 2 to 12 wt%, preferably 3 to 10 wt%, such as 3.5 to 9 wt%.

It is preferred if the random polypropylene copolymer is essentially crystalline. It may possess a melting point of 125 to 160°C, preferably 130 to 150°C.

The $MFR_2$ of the polypropylene random copolymer is preferably 12.0 g/10min or less, such as 10.0 g/10min or less, such as 8.0 g/10min or less, especially 5 g/10min or less. Minimum values might be 0.01 g/10min, such as 0.1 g/10min. The polypropylene is preferably clarified.

It is preferred if the polypropylene random copolymer has a high weight average molecular weight (Mw) such as at least 75,000, preferably at least 100,000 such as at least 150,000, more preferably 200,000 or more. Some polypropylene random copolymers of interest can have Mw values of at least 250,000.

The molecular weight distribution of the polypropylene random copolymer can vary but as these are preferably multimodal polymers, preferred Mw/Mn values are 3 or more, such as 6 or more, even 10 or more. Ranges of 3.5 to 30 are envisaged.

The random polypropylene copolymer can be unimodal or multimodal, such as bimodal. It is preferred if the random polypropylene copolymer is multimodal, especially bimodal. A unimodal polymer possesses a single peak in the GPC curve and is formed in a single step. The term unimodal means unimodal with respect to molecular weight distribution.

A multimodal polypropylene random copolymer of the invention is produced in at least two stages, ideally two stages only, and therefore contains at least two fractions, preferably two fractions only.

The term "multimodal" means herein, unless otherwise stated, multimodality with respect to molecular weight distribution and includes therefore a bimodal polymer. Usually, a polymer composition, comprising at least two polyolefin fractions, which have been produced under different polymerization conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer will show two or more maxima or is typically distinctly broadened in comparison with the curves for the individual fractions. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product.

It is preferred if the polypropylene random copolymer of the invention is multimodal especially bimodal. The preferred polypropylene random copolymer usable in the present invention comprises at least a first component and a second component. The first component is made in the earlier of any multistage process.

The components making up the multimodal polypropylene are copolymers and it is preferred that the components are different, e.g. with respect to their comonomer contents. Where multicomponents are present in the random propylene copolymer of the invention it is essential that all components are random copolymers.

The random copolymer may also be a random heterophasic copolymer. In the random heterophasic copolymer, one component thereof is typically a rubber having a high comonomer content and a second component contains a lower comonomer content.

Suitable polypropylenes are commercially available from suppliers such as Borealis, Dow, Exxon and so on.

The outer polypropylene layer can consist essentially of the polypropylene random copolymer. By consists essentially of is meant that the polypropylene random copolymer forms the only polyolefin present in the layer. It will be appreciated that the polypropylene random copolymer may comprise standard polymer additives and clarifiers as discussed below.

It is also possible however for other components to be present in the polypropylene layer, however there is no polyethylene component present in the polypropylene layer. By polyethylene is meant a polyolefin in which ethylene forms at least 50 wt% of the monomers present.

It is preferred therefore if any other components in the outer polypropylene layer are also propylene polymers (in which propylene forms at least 50 wt% of the monomers present). The polypropylene random copolymer used in the invention is not a block copolymer (i.e. it is not a heterophasic polypropylene) but it is within the scope of the invention for the polypropylene layer to contain an additional polymer component which may be a heterophasic propylene copolymer. Such a polymer contains a crystalline component typically formed from a propylene homopolymer and an amorphous rubbery component typically formed from a propylene ethylene rubber. Block copolymers have blocks of identical repeating units in the amorphous component.

These heterophasic polymers are known in the art and can be purchased commercially. Heterophasic copolymers of interest may contain up to 9 wt% of comonomer, typically ethylene. $MFR_2$ values of these polymers are the same as the polypropylene random copolymer described above.

If such a component is present it preferably forms no more than 30 wt% of the polypropylene layer, e.g. 1 to 20 wt%.

The polypropylene layer can also comprise a mixture of polypropylene random copolymers or it might contain a polypropylene homopolymer component.

The polypropylene layer preferably comprises at least 70 wt%, preferably at least 80 wt% of the random polypropylene copolymer of the invention (either one such a polymer or a mixture thereof). In some embodiments there may be more than 90wt%, such as at least 95 wt% of the polypropylene random copolymer.

The polypropylene random copolymer can be prepared using a Ziegler Natta or metallocene catalyst as is known in the art. Such single site catalysts are described in detail below. The use of Ziegler Natta catalysts is familiar in the art.

It will be appreciated that the invention can employ a polypropylene layer featuring one or more of the features disclosed above in combination.

**Additional Layers**

The films of the invention must possess the polypropylene layer defined above and the sealing layer defined below as outer layers. The films may posses one or more core layers in addition to those layers, preferably one core layer.

Where a core layer is present it is preferred if that layer comprises a polyolefin, especially a polypropylene. It is envisaged that the core layer can provide further mechanical strength to the polymer film and it is therefore advantageous if that layer comprises a propylene polymer such as a propylene homopolymer, a random heterophasic propylene copolymer, a propylene heterophasic block copolymer or a random propylene copolymer.

Preferably still, any core layer will possess a random polypropylene copolymer as defined above for the polypropylene layer. It is especially preferred in fact, if any core layer meets the requirements for the polypropylene layer.

It is within the scope of the invention if the core layer is free of an LLDPE, especially an mLLDPE. In some embodiments, this layer is free of any polyethylene.

**Sealing layer**

The sealing layer has to be outermost on the films of the invention. For obvious reasons, the sealing layer must be able to contact a surface to which a seal is desired so the sealing layer cannot therefore be sandwiched within the centre of a film. The sealing layer comprises at least one LLDPE having an $MFR_2$ of 2 g/10min or more, such as 2-20 g/10min, preferably 2-15 g/10min, especially 2-10 g/10min, most especially 2.5-6 g/10 min or 3 to 6 g/10min.

It has been surprisingly found that if the $MFR_2$ of the LLDPE employed is less than 2 g/10 min and the sealing layer meets the thickness requirement of the invention, then the films formed therefrom curl.

The polyethylene of the sealing layer is a linear low density polyethylene (LLDPE). It may have a density in the range of 905 to 935 $kg/m^3$, preferably 910-930 $kg/m^3$ preferably such as 912 to 925 $kg/m^3$.

The weight average molecular weight Mw of the LLDPE is preferably no more than 100,000, preferably no more than 75000, such as 50,000 or less. It is believed that by using a polyethylene with low Mw weight reduce curling effect.

The Mw/Mn of the LLDPE is preferably relatively low, e.g. less than 4. The range may be 2 to 4 such as 2 to 3.5 or 2 to 3.

The LLDPE contains at least one, preferably only one, comonomer. That comonomer is preferably a C3-10 alpha olefin comonomer. The use therefore of terpolymers is possible but is not favoured. Preferably the comonomer is 1-butene, 1-hexene or 1-octene. It is preferred if the comonomer employed is 1-octene.

The amounts of comonomer present in the LLDPE can range from 0.5 to 10 wt%, such as 0.5 to 5 wt%, e.g. 1 to 4 wt%. The LLDPE of use in the sealing layer can be unimodal or multimodal, preferably multimodal. A unimodal LLDPE possesses a single peak in its GPC spectrum as it is made in a single stage process. These terms are discussed in detail above in connection with the polypropylene layer.

It is possible to use mixtures of LLDPE's in the sealing layer of the invention. It will be appreciated that at least one of the LLDPE's must possess the $MFR_2$ requirement of the invention. Preferably, any LLDPE used in the sealing layer has an $MFR_2$ of 2.0 g/10min or more.

It is preferred if an LLDPE having an $MFR_2$ of 2.0 g/10min or more forms at least 50 wt%, preferably at least 70 wt%, such as at least 80wt% of the sealing layer. The sealing layer may consist essentially of the LLDPE. By consist essentially of is meant that the LLDPE forms the only polyolefinic compound present in the sealing layer but the layer may of course contain standard polymer additives as discussed below.

It is also within the scope of the invention for the sealing layer to comprise other polyolefinic components. Preferably however the sealing layer should be free of polypropylene polymers (i.e. polymers in which propylene forms at least 50wt% of the monomers present). A particular blend of interest for the sealing layer is a mixture of the LLDPE of the invention with low density polyethylene (LDPE). In such a blend, the low density polyethylene LDPE can form 1 to 50 wt% of the blend, such as 2 to 30 wt%, preferably 5 to 20 wt% of the blend.

The LDPE may have a density of 905 to 935 $kg/m^3$. It may have an $MFR_2$ of less than 2 g/10min.

The LLDPE of the invention can be produced using Ziegler Natta catalysts but is preferably produced using a single site catalyst, e.g. a catalyst comprising a metal coordinated by one or more η-bonding ligands. Such η-bonded metals are typically Zr, Hf or Ti, especially Zr or Hf. The η-bonding ligand is typically an η5-cyclic ligand, i.e. a homo or heterocyclic cyclopentadienyl group optionally with fused or pendant substituents. Such single site, preferably metallocene procatalysts, have been widely described in the scientific and patent literature for about twenty years.

The metallocene procatalyst may have a formula II:

$$(Cp)_m R_n MX_q \qquad (II)$$

wherein:

each Cp independently is an unsubstituted or substituted and/or fused homo- or heterocyclopentadienyl ligand, e.g. substituted or unsubstituted cyclopentadienyl, substituted or unsubstituted indenyl or substituted or unsubstituted fluorenyl ligand;

the optional one or more substituent(s) being independently selected preferably from halogen, hydrocarbyl (e.g. C1-C20-alkyl, C2-C20-alkenyl, C2-C20-alkynyl, C3-C12-cycloalkyl, C6-C20-aryl or C7-C20-arylalkyl), C3-C12-cycloalkyl which contains 1, 2, 3 or 4 heteroatom(s) in the ring moiety, C6-C20-heteroaryl, C1-C20-haloalkyl, -SiR"$_3$, -OSiR"$_3$, -SR", -PR"$_2$ or -NR"$_2$,

each R" is independently a hydrogen or hydrocarbyl, e.g. C1-C20-alkyl, C2-C20-alkenyl, C2-C20-alkynyl, C3-C12-cycloalkyl or C6-C20-aryl; or e.g. in case of -NR"$_2$, the two substituents R" can form a ring, e.g. five- or six-membered ring, together with the nitrogen atom to which they are attached;

R is a bridge of 1-7 atoms, e.g. a bridge of 1-4 C-atoms and 0-4 heteroatoms, wherein the heteroatom(s) can be e.g. Si, Ge and/or O atom(s), wherein each of the bridge atoms may bear independently substituents, such as C1-C20-alkyl, tri(C1-C20-alkyl)silyl, tri(C1-C20-alkyl)siloxy or C6-C20-aryl substituents); or a bridge of 1-3, e.g. one or two, hetero atoms, such as silicon, germanium and/or oxygen atom(s), e.g. -SiR$^1_2$-, wherein each R$^1$ is independently C1-C20-alkyl, C6-C20-aryl or tri(C1-C20-alkyl)silyl- residue, such as trimethylsilyl;

M is a transition metal of Group 3 to 10, preferably of Group 4 to 6, such as Group 4, e.g. Ti, Zr or Hf, especially Hf;

each X is independently a sigma-ligand, such as H, halogen, C1-C20-alkyl, C1-C20-alkoxy, C2-C20-alkenyl, C2-C20-alkynyl, C3-C12-cycloalkyl, C6-C20-aryl, C6-C20-aryloxy, C7-C20-arylalkyl, C7-C20-arylalkenyl, -SR", -PR"$_3$, -SiR"$_3$, - OSiR"$_3$, -NR"$_2$ or -CH$_2$-Y, wherein Y is C6-C20-aryl, C6-C20-heteroaryl, C1-C20-alkoxy, C6-C20-aryloxy, NR"$_2$, -SR", -PR"$_3$, -SiR"$_3$, or -OSiR"$_3$;

each of the above mentioned ring moieties alone or as a part of another moiety as the substituent for Cp, X, R" or R$^1$ can further be substituted e.g. with C1-C20-alkyl which may contain Si and/or O atoms;

n is 0, 1 or 2, e.g. 0 or 1,

m is 1, 2 or 3, e.g. 1 or 2,

q is 1, 2 or 3, e.g. 2 or 3,

wherein m+q is equal to the valency of M.

Suitably, in each X as -CH$_2$-Y, each Y is independently selected from C6-C20-aryl, NR"$_2$, -SiR"$_3$ or -OSiR"$_3$. Most preferably, X as -CH$_2$-Y is benzyl. Each X other than -CH$_2$-Y is independently halogen, C1-C20-alkyl, C1-C20-alkoxy, C6-C20-aryl, C7-C20-arylalkenyl or -NR"$_2$ as defined above, e.g. -N(C1-C20-alkyl)$_2$.

Preferably, q is 2, each X is halogen or -CH$_2$-Y, and each Y is independently as defined above.

Cp is preferably cyclopentadienyl, indenyl, tetrahydroindenyl or fluorenyl, optionally substituted as defined above.

In a suitable subgroup of the compounds of formula II, each Cp independently bears 1, 2, 3 or 4 substituents as defined above, preferably 1, 2 or 3, such as 1 or 2 substituents, which are preferably selected from C1-C20-alkyl, C6-C20-aryl, C7-C20-arylalkyl (wherein the aryl ring alone or as a part of a further moiety may further be substituted as indicated above), -OSiR"$_3$, wherein R" is as indicated above, preferably C1-C20-alkyl.

R, if present, is preferably a methylene, ethylene or a silyl bridge, whereby the silyl can be substituted as defined above, e.g. a (dimethyl)Si=, (methylphenyl)Si= or (trimethylsilylmethyl)Si=; n is 0 or 1; m is 2 and q is two. Preferably, R" is other than hydrogen.

A specific subgroup includes the well known metallocenes of Zr, Hf and Ti with two eta5-ligands which may be bridged or unbridged cyclopentadienyl ligands optionally substituted with e.g. siloxy, or alkyl (e.g. C1-6-alkyl) as defined above, or with two unbridged or bridged indenyl ligands optionally substituted in any of the ring moieties with e.g. siloxy or alkyl as defined above, e.g. at 2-, 3-, 4- and/or 7-positions. Preferred bridges are ethylene or -SiMe$_2$.

The preparation of the metallocenes can be carried out according or analogously to the methods known from the literature and is within skills of a person skilled in the field. Thus for the preparation see e.g. EP-A-129 368, examples of compounds wherein the metal atom bears a -NR"$_2$ ligand see i.a. in WO-A-9856831 and WO-A-0034341. For the preparation see also e.g. in EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130.

Alternatively, in a further subgroup of the metallocene compounds, the metal bears a Cp group as defined above and additionally a eta1 or eta2 ligand, wherein said ligands may or may not be bridged to each other. Such compounds are described e.g. in WO-A-9613529, the contents of which are incorporated herein by reference.

Further preferred metallocenes include those of formula (I)

$$Cp'_2HfX'_2$$

wherein each X' is halogen, C1-6 alkyl, benzyl or hydrogen;

Cp' is a cyclopentadienyl or indenyl group optionally substituted by a C1-10 hydrocarbyl group or groups and being optionally bridged, e.g. via an ethylene or dimethylsilyl link. Bis (n-butylcyclopentadienyl) hafnium dichloride and Bis (n-butylcyclopentadienyl) hafnium dibenzyl are particularly preferred.

Metallocene procatalysts are generally used as part of a catalyst system which also includes a cocatalyst or catalyst activator, for example, an aluminoxane (e.g. methylaluminoxane (MAO), hexaisobutylaluminoxane and tetraisobutylaluminoxane) or a boron compound (e.g. a fluoroboron compound such as triphenylpentafluoroboron or triphen-tylcarbenium tetraphenylpentafluoroborate (($C_6H_5$)$_3$B$^+$B$^-$($C_6F_5$)$_4$)). The preparation of such catalyst systems is well known in the field.

If desired the procatalyst, procatalyst/cocatalyst mixture or a procatalyst/cocatalyst reaction product may be used in unsupported form or it may be precipitated and used as such. One feasible way for producing the catalyst system is based on the emulsion technology, wherein no external support is used, but the solid catalyst is formed from by solidification of catalyst droplets dispersed in a continuous phase. The solidification method and further feasible metallocenes are described e.g. in WO03/051934 which is incorporated herein as a reference.

The activator is a compound which is capable of activating the transition metal component. Useful activators are, among others, aluminium alkyls and aluminium alkoxy compounds. Especially preferred activators are aluminium alkyls, in particular aluminium trialkyls, such as trimethyl aluminium, triethyl aluminium and tri-isobutyl aluminium. The activator is typically used in excess to the transition metal component. For instance, when an aluminium alkyl is used as an activator, the molar ratio of the aluminium in the activator to the transition metal in the transition metal component is from 1 to 500 mol/mol, preferably from 2 to 100 mol/mol and in particular from 5 to 50 mol/mol.

It is also possible to use in combination with the above-mentioned two components different co-activators, modifiers and the like. Thus, two or more alkyl aluminium compounds may be used, or the catalyst components may be combined with different types of ethers, esters, silicon ethers and the like to modify the activity and/or the selectivity of the catalyst, as is known in the art.

Suitable combinations of transition metal component and activator are disclosed among others, in the examples of WO 95/35323.

If the LLDPE used in the seal layer is formed from single site catalysis this imparts important properties into the polymer. Single site LLDPE's typically possess good mechanical properties and narrow molecular weight distribution for example.

It will be appreciated that the invention can employ a sealing layer featuring one or more of the features disclosed above in combination. This layer can also be used in conjunction with any polypropylene layer as hereinbefore described.

**Preparation of Polyethylene/polypropylene**

For the preparation of the polymers of the present invention polymerisation methods well known to the skilled person may be used. Multimodal, e.g. bimodal, polymers are produced by blending each of the components *in-situ* during the polymerisation process thereof (so called in-situ process) in a manner known in the art.

The multimodal polymers useful in the present invention are preferably obtained by *in-situ* blending in a multistage, i.e. two or more stage, polymerization process including solution, slurry and gas phase process, in any order. Whilst it is possible to use different single site catalysts in each stage of the process, it is preferred if the catalyst employed is the same in both stages.

Ideally therefore, the multimodal polymers of the invention are produced in at least two-stage polymerization using the same catalyst. Thus, for example two slurry reactors or two gas phase reactors, or any combinations thereof, in any order can be employed. Preferably however, the polyethylene is made using a slurry polymerization in a loop reactor followed by a gas phase polymerization in a gas phase reactor.

A loop reactor - gas phase reactor system is well known as Borealis technology, i.e. as a BORSTAR™ reactor system. Such a multistage process is disclosed e.g. in EP517868.

The conditions used in such a process are well known. For slurry reactors, the reaction temperature will generally be in the range 60 to 110°C, e.g. 85-110°C, the reactor pressure will generally be in the range 5 to 80 bar, e.g. 50-65 bar, and the residence time will generally be in the range 0.3 to 5 hours, e.g. 0.5 to 2 hours. The diluent used will generally be an aliphatic hydrocarbon having a boiling point in the range -70 to +100°C, e.g. propane. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C, e.g. 70 to 110°C, the reactor pressure will generally be in the range 10 to 25 bar, and the residence time will generally be 1 to 8 hours. The gas used will commonly be a non-reactive gas such as nitrogen or low boiling point hydrocarbons such as propane together with monomer.

A chain-transfer agent, preferably hydrogen, can be added as required to the reactors. A prepolymerisation step may precede the actual polymerisation process.

Where a unimodal polymer is used, this can be one formed in one stage of the process described above, e.g. the polymer formed in the loop reactor.

The polymers of the invention are not themselves new and processes for their manufacture are known. They are also commercially available.

It will be appreciated that both the polypropylene and polyethylene components of the films of the invention may contain standard polymer additives. These typically form less than 5 wt%, such as less than 2 wt% of the polymer material. Additives, such as antioxidants, phosphites, cling additives, pigments, colorants, fillers, anti-static agent, processing aids, clarifiers and the like may also be included in the polymers of the present invention and hence in films formed from them. Films may also contain standard additives such as antiblocking agents, slip agents, mold release agents and so on. These additives are well known in the industry and their use will be familiar to the artisan.

Polymer properties are measured in the absence of additives. Film properties are measured on the formed film and those are likely therefore to contain additives from the polymers.

**Films**

The films of the invention are preferably 15 to 200 $\mu$m, more preferably 20 to 150 $\mu$m thickness in thickness. It is especially preferred if the films are 20 to 60 $\mu$m in thickness.

The films preferably do not curl upon cooling. In general, the invention defines a film which resists curling as one whose width is 75% or more of the projected width of the film, preferably 80% or more, such as 85% or more of the projected width after the formed film has cooled to ambient (room) temperature. In other words, films of the invention preferably curl less than 25% of their widths. The curling test is described in detail below. It will be appreciated that films typically curl in the transverse direction. Curling is often prevented in the machine direction during production as the film is under tension in the machine direction.

The sealing layer tends to shrink more than the polypropylene layer so any curling will typically be in the direction of the sealing layer.

Without wishing to be limited by theory, it is envisaged that the similarity between the shrinking behaviour of the polypropylene random copolymer and the sealing layer gives rise to a non curling film.

The films of the invention can possess valuable mechanical properties such as high impact strength, stiffness, heat resistance and tensile properties.

The films also possess low sealing initiation temperatures. Seal initiation temperatures can start at 93°C or more, such as 94°C or more, preferably 95°C or more. Successful sealing can be achieved up to temperatures of 125°C or more without any loss of seal force.

The maximum seal force achieved (measured on a sealing layer of 13 microns) can be 20 MPa or more, such as 22 MPa or more, especially 24 MPa or more. It is a particular feature of the invention that the seal force can remain above 20 MPa over a range for sealing temperatures, e.g. when the temperature is in the range 95 to 125°C.

Thus, the films of the invention are preferably sealable over a temperature range of at least 20°C, such as at least 25°C.

The films of the invention preferably comprise 2 to 5 layers, such as 2, 3 or 5 layers, especially 2 or 3 layers, such as 3 layers. It will be appreciated that these films are produced by coextrusion. Commercially available coextruders produce 3 or 5 layer films. However if the material coextruded in two adj acent layers is identical, in the formed film, only one layer is detected. Thus, an AAB coextrusion, effectively leads to a two layer film as the two A layers exiting the coextruder are indistinguishable in the formed, cooled film.

It is preferred if the films of the invention are ABC type films with layers A and B comprising a polypropylene layer and additional layer as hereinbefore defined. Layer C is the sealing layer. In the specific circumstance that the A and B layers are the same, an AAB structure results, i.e. effectively an AB structure.

It is requirement of the invention that the sealing layer forms at least 18% of total thickness of the film, preferably at least 20%, especially at least 25% of the thickness of the film.

It is preferred if the polypropylene layer forms at least 18% of total thickness of the film, preferably at least 20%, especially at least 25% of the thickness of the film. As observed in the examples which follow, if the sealing layer is too thin, the sealing properties of the film are poor. Films in which the sealing layer forms less than 15% of the thickness of the firm general have weak sealing properties. There may also be a processability issue forming a film having one layer which is particularly thin. Coextruders general form layers with equal thickness. If the film thicknesses are manipulated such that very thin layers are used, coextrusion thereof becomes an issue. A preferred option in the invention is for the film layers to be evenly distributed.

The additional layer (or layers) may also form at least 18% of total thickness of the film, preferably at least 20%, especially at least 25% of the thickness of the film.

The films of the invention are preferably free of any adhesive layers (tie layers). The film layers adhere strongly to each other and the films provide such strong seals that no additional adhesive is necessary. It is also preferred if the sealing layer is directly adjacent a polypropylene containing layer.

**Film Manufacture**

The films of the invention are blown films and are manufactured by coextrusion and blowing. The films of the invention are not therefore cast films. In order to manufacture films of the invention, at least two polymer melt streams (especially the polymer melt stream of the sealant layer and the polymer melt stream of the polypropylene layer) are simultaneously extruded (i.e. coextruded) through a multi-channel tubular, annular or circular die to form a tube which is blown-up, inflated and/or cooled with air (or a combination of gases) to form a film. The manufacture of blown film is a well known process.

The film of the invention will typically be produced by extrusion through an annular die, blowing into a tubular film by forming a bubble which is collapsed between nip rollers after solidification. This film can then be slit, cut or converted (e.g. gusseted) as desired. Conventional film production techniques may be used in this regard. Typically, the layers will be coextruded at a temperature in the range 160°C to 240°C, and cooled by blowing gas (generally air) at a temperature of 10 to 50°C to provide a frost line height of 2 to 8 times the diameter of the die. The blow up ratio should generally be in the range 2 to 5, preferably 2.5 to 4. Suitable die diameters are in the range 100 to 250 mm.

**Applications**

The films of the invention can be employed in a wide variety of end applications however they are of particular interest in the manufacture of food, drink and medical packaging. In particular the films may be utilised in lidding films, especially in conjunction with thermoformed containers made from a multilayer structure similar to that of the lid. The sealing layer is preferably sealed against a polyethylene layer in the tray.

The films are of particular use in the packaging of products in which a tray is formed by thermoforming and a film applied across the top of that tray. Such packaging is common for cold meats, fish, fruit and so on. The film of the invention can be used both to form the thermoformed tray and the sealing film.

It is also possible to laminate the films of the invention to a substrate. Lamination techniques are well known in the art and substrate options include metal foils, other polyolefins, polymeric supports based on barrier films such as polyamides and so on.

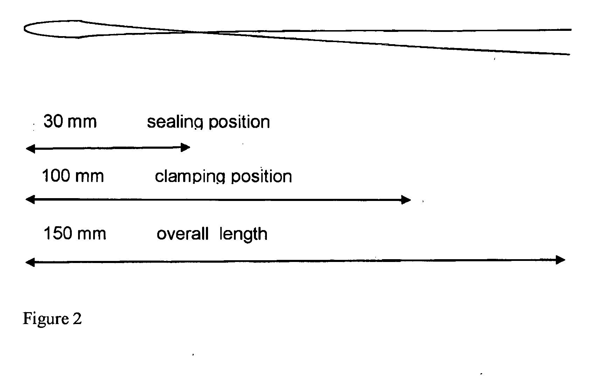

The invention will now be described with reference to the following non limiting examples. Figure 1 is a theoretical depiction of curling films. Figure 2 is a diagram of the sealing test protocol.

**Analytical Tests**

**Melt Flow Rate**

The melt flow rate (MFR) is determined according to ISO 1133 and is indicated in g/10 min. The MFR is an indication of the melt viscosity of the polymer. The MFR is determined at 190°C for polyethylene and 230°C for polypropylene. The load under which the melt flow rate is determined is usually indicated as a subscript, for instance $MFR_2$ is measured under 2.16 kg load (condition D), $MFR_5$ is measured under 5 kg load (condition T) or $MFR_{21}$ is measured under 21.6 kg load (condition G).

**Density**

Density of the polymer was measured according to ISO 1183 / 1872-2B.

**Molecular weight**

$M_w$, $M_n$ and MWD are measured by Gel Permeation Chromatography (GPC) according to the following method:

The weight average molecular weight $M_w$ and the molecular weight distribution (MWD = $M_w/M_n$ wherein $M_n$ is the number average molecular weight and $M_w$ is the weight average molecular weight) is measured according to ISO 16014-4:2003 and ASTM D 6474-99. A Waters GPCV2000 instrument, equipped with refractive index detector and online viscosimeter was used with 2 x GMHXL-HT and Ix G7000HXL-HT TSK-gel columns from Tosoh Bioscience and 1,2,4-trichlorobenzene (TCB, stabilized with 250 mg/L 2,6-Di tert-butyl-4-methyl-phenol) as solvent at 140 °C and at a constant flow rate of 1 mL/min. 209.5 5 μL of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants were used as given in ASTM D 6474-99. All samples were prepared by dissolving 0.5 - 4.0 mg of polymer in 4 mL (at 140 °C) of stabilized TCB (same as mobile phase) and keeping for max. 3 hours at a maximum temperature of 160 °C with continuous gentle shaking prior sampling in into the GPC instrument.

As it is known in the art, the weight average molecular weight of a blend can be calculated if the molecular weights of its components are known according to:   $$Mw_b = \sum_i w_i \cdot Mw_i$$

where

Mw$_b$ is the weight average molecular weight of the blend,
w$_i$ is the weight fraction of component "i" in the blend and
Mw$_i$ is the weight average molecular weight of the component "i".

The number average molecular weight can be calculated using the well-known mixing rule:

$$\frac{1}{Mn_b} = \sum_i \frac{w_i}{Mn_i}$$

where

Mn$_b$ is the weight average molecular weight of the blend,
w$_i$ is the weight fraction of component "i" in the blend and
Mn$_i$ is the weight average molecular weight of the component "i".

**Curling test method**

The multilayer films are stored winded for at least 96 hours at 23°C/50 % relative humidity. Then DIN A4 sheets (20 * 30 cm$^2$) were cut out of the multilayer blown film. The 30 cm side corresponds to the machine direction and the 20 cm side corresponds to transversal direction. The cut out sheets are placed on a flat surface and the resulting projected dimension (i.e. a birds eye view looking down from above) of the 20 cm side is determined.

The surface on which the specimens are placed for measurement should be rough and not polished to prevent a so called "glass-plate-effect" (sticking of the film due to vacuum between film and surface).

The film curls in a way that the dimension 20 cm side is significantly more reduced, i.e. curls more than the 30 cm side. Curling is significantly more pronounced therefore in the transversal direction. It will be noted of course that that during further conversion, e.g. lamination, a certain tension in machine direction is applied on the film. Curling can generally only take place in transversal direction therefore and the invention targets exactly that problem.

**Differential Scanning Calorimeter (DSC)**

The Melting Temperature (T$_m$) and the Crystallization Temperature (T$_{cr}$) were measured with Mettler TA820 differential scanning calorimeter (DSC) on $3\pm0.5$ mg samples. Both crystallization and melting curves were obtained during 10°C/min cooling and heating scans between -10 - 200°C. Melting and crystallization temperatures were taken as the peaks of endotherms and exotherms, respectively. The degree of crystallinity was calculated by comparison with heat of fusion of a perfectly crystalline polyethylene, i.e. 290 J/g.

**Comonomer Content (NMR):**

The comonomer content was determined by using $^{13}$C -NMR. The $^{13}$C -NMR spectra were recorded on Bruker 400 MHz spectrometer at 130 °C from samples dissolved in 1,2,4-trichlorobenzene/benzene-d6 (90/10 w/w).

The following commercially available resins are used in the invention:

**Exceed 1018EB** - metallocene LLDPE of MFR$_2$ 1.0 g/10min and density 0.918 g/m$^3$.
**FT5230** - LDPE of MFR$_2$ 0.75 g/10min and density 0.923 g/m$^3$.
**BC918CF** - Heterophasic polypropylene of MFR$_2$ = 3 g/10min
**RB707CF** - propylene/ethylene random copolymer of MFR$_2$ = 1.5 g/10min
**RB707MO** - propylene/ethylene random copolymer of MFR$_2$ = 2.9 g/10min
**Surpass FPs317-C** bimodal metallocene LLDPE of MFR$_2$ of 3.0 g/10 min and density 0.918 g/m$^3$.
**Surpass FPs 117-C** metallocene LLDPE of MFR$_2$ of 1.0 g/10 min and density 0.918 g/m$^3$.

**Example 1**

**Films were prepared following the protocols below:**

Multilayer blown films were produced on a three-layer coextrusion line with a barrel diameter of 50 mm and a tubular die of 200 mm diameter x 1,5 mm die gap. Melt temperature was 225°C for processing polypropylene and 205°C for the polyethylene-line; the external cooling air was kept at 18 °C, internal bubble cooling was not applied.

A film thickness of 40 $\mu$m was adjusted through the ratio between extruder output (60kg/h), blow up ratio (2,5:1) and takeoff speed (20 m/min).

**Comparative Film 1:** Symmetrical 3 layer film 40$\mu$m in thickness:

structure A/B/A (20/60/20%)

Layer A: 90% Exceed 1018EB + 10% FT5230
Layer B: 80% BC918CF + 20% RB707CF

**Inventive film 1 -** Asymmetric 3 layer film 40μm in thickness:

Structure A/A/B (33/34/33%)
Layer A: 100% RB707CF
Layer B: 100% Surpass FPs317-C

The seal initiation and seal force of these two films was measured based on the following protocol. Films used were 40 μm thickness, 25 mm width, 300 mm long. Films were sealed to themselves using a seal pressure of 0.66 N/mm$^2$ which was exerted for 1 s over a temperature of 92 to 140°C. The delay time was 30 s. To test peel strength, a peel speed of 42 mm/s was employed. Each test was repeated three times and an average taken.

Figure 2 is a diagram of the sealing test protocol. As can be seem the film is folded on itself and sealed 30 mm from the fold. The seal test is carried out by peeling starting 100 mm from the fold.

Results are presented in Table 2. It can clearly be seen that the films of the invention can be sealed successfully at around the same seal initiation temperatures as symmetrical films but the seal force can be maintained over a broader range of seal temperatures. The films of the invention provide therefore a broader operation window than the symmetric films. Average seal force is higher in the films of the invention.

## Example 2

Following the protocol of example 1, the following additional films were prepared. All films were prepared to possess a thickness of 40 μm and a width of 20 cm.

Table 1

| Film | A | B | C | layer distr. | actual width | total width |
|------|---|---|---|--------------|--------------|-------------|
| 2 | RB707CF | RB707CF | FPs317-C | 33/34/33% | 19.7 | 20.5 |
| 3 | RC707MO | RB707CF | FPs317-C | 33/34/33% | 16 | 20 |
| C4 | BC918CF | RB707CF | FPs317-C | 33/34/33% | 1.5 | 20.5 |
| C5 | RB707CF | RB707CF | FPs117-C | 33/34/33% | 3.5 | 20.5 |
| C6 | RB707CF | RB707CF | FPs117-C | 15/70/15% | 20.1 | 20.5 |

The total width of each film should be approximately 20.5 cm. If a film curls, the measured width reduces depending on the severity of the curl. It is clear therefore that comparative films 4 and 5 curl so much that they adopt a cylindrical shape. The diameter of that cylinder is 1.5 or 3.5 cm. Film 5 employs a LLDPE with MFR of less than 2 g/10min. These LLDPE's do not resist curling and that is reflected in the results.

Film 4 has an A layer formed from the heterophasic copolymer as opposed to a random propylene copolymer. These films do not resist curl either. It is a requirement of the invention that the outer layer comprises the random propylene copolymer.

Film 6 does not curl significantly because the thickness of the C layer represents only 15% of the overall thickness of the film. These films have poor sealing properties as illustrated below.

Films 2 and 3 represent the invention and resist curling possessing actual width within 25% of the projected value. Film 2 is effectively an AB structure. Film 3 uses two different propylene ethylene random copolymers in its A and B layers.

## Sealing Properties

Sealing properties of examples CE5 and CE6 were measured following the protocols above but using a seal pressure of 0.4 N/mm$^2$. The sealing properties of comparative examples 5 and 6 are shown in table 2. For CE5, a peel force of 10N is achieved at around 95°C. The sealing window operates until 130°C. In contrast, for CE6, a peel force of 10 N is not achieved until 100°C. Moreover, after 110°C, the seal window begins to close and seal strength reduces.

Table 2 - Seal Force Data

|  | Ex 1 | CE1 | CE5 | CE6 |
|---|---|---|---|---|
| Seal Temp °C | Seal Force (N) | Seal Force (N) | Seal Force (N) | Seal Force (N) |
| 90 |  |  |  | 2.00 |
| 93 |  |  | 2.79 | 4.68 |
| 95 | 1.12 |  | 10.20 | 8.73 |
| 96 | 11.90 | 12.90 |  |  |
| 97 | 15.10 |  |  |  |
| 100 | 18.10 | 15.90 | 16.70 | 10.60 |
| 105 | 21.00 | 15.50 | 21.20 | 22.80 |
| 110 | 21.70 | 13.20 | 22.60 | 25.50 |
| 115 | 22.20 | 12.40 | 23.60 | 24.10 |
| 120 | 21.40 | 11.00 | 22.80 | 23.10 |
| 125 | 21.70 | 10.50 | 23.50 | 22.90 |
| 130 | 22.70 | 9.95 | 23.60 | 20.20 |

**Claims**

1.  An asymmetric blown multilayer film comprising at least two layers, an outer polypropylene containing layer, at least one core layer and an outer sealing layer;
    wherein said outer polypropylene layer is free of polyethylene and comprises at least one polypropylene random copolymer; and
    said sealing layer comprises at least one LLDPE having an $MFR_2$ of at least 2 g/10min (ISO1133);
    wherein at least 18% of total thickness of the film derives from the sealing layer.

2.  An asymmetrical film as claimed in any preceding claim wherein the polypropylene random copolymer is multimodal.

3.  An asymmetrical film as claimed in any preceding claim wherein the polypropylene random copolymer has an $MFR_2$ of 0.1 to 12 g/10min.

4.  An asymmetrical film as claimed in any preceding claim wherein the comonomer in the polypropylene random copolymer is ethylene.

5.  An asymmetrical film as claimed in any preceding claim wherein the polypropylene random copolymer is a random heterophasic copolymer.

6.  An asymmetrical film as claimed in any preceding claim wherein the LLDPE has an Mw is less than 100,000.

7.  An asymmetrical film as claimed in any preceding claim wherein the LLDPE is made by single site catalysis.

8.  An asymmetrical film as claimed in any preceding claim wherein the LLDPE has a density of less than 920 kg/m$^3$ (ISO1183).

9.  An asymmetrical film as claimed in any preceding claim wherein the LLDPE comonomer is octene.

10. An asymmetrical film as claimed in any preceding claim wherein the outer polypropylene layer is free of polyethylene and the polyethylene sealing layer is free of polypropylene.

11. An asymmetrical film as claimed in any preceding claim having a further layer comprising a random polypropylene copolymer.

**12.** An asymmetrical film as claimed in any preceding claim having 2 or 3 layers.

**13.** An asymmetrical film as claimed in any preceding claim wherein each layer forms at least 20% of the thickness of the film, preferably at least 25%.

**14.** A process for the preparation of a film as claimed in claim 1 to 13 comprising coextruding and then blowing at least one polypropylene random copolymer so as to form an outer polypropylene layer which is free of polyethylene; and at least one LLDPE having an $MFR_2$ of at least 2 g/10min so as to form an outer sealing layer; wherein at least 18% of total thickness of the film derives from the sealing layer.

**Patentansprüche**

**1.** Asymmetrische geblasene Mehrschichtfolie, umfassend mindestens zwei Schichten, eine äußere, Polypropylen enthaltenen Schicht, mindestens eine Kernschicht und eine äußere Versiegelungsschicht; wobei die äußere Polypropylen-Schicht frei von Polyethylen ist und mindestens ein Polypropylen-Random-Copolymer umfasst; und die Versiegelungsschicht mindestens ein LLDPE mit einer $MFR_2$ von mindestens 2g/10min (ISO 1133) umfasst; wobei die Versiegelungsschicht mindestens 18 % der Gesamtdicke der Folie ausmacht.

**2.** Asymmetrische Folie nach jedem beliebigen der obigen Ansprüche, wobei das Polypropylen-Random-Copolymer multimodal ist.

**3.** Asymmetrische Folie nach jedem beliebigen der obigen Ansprüche, wobei das Polypropylen-Random-Copolymer eine $MFR_2$ von 0,1 bis 12 g/10min. aufweist.

**4.** Asymmetrische Folie nach jedem beliebigen der obigen Ansprüche, wobei das Comonomer im Polypropylen-Random-Copolymer Ethylen ist.

**5.** Asymmetrische Folie nach jedem beliebigen der obigen Ansprüche, wobei das Polypropylen-Random-Copolymer ein heterophasisches Random-Copolymer ist.

**6.** Asymmetrische Folie nach jedem beliebigen der obigen Ansprüche, wobei das LLDPE eine Mw von unter 100 000 aufweist.

**7.** Asymmetrische Folie nach jedem beliebigen der obigen Ansprüche, wobei das LLDPE durch Einzentren-Katalyse hergestellt wird.

**8.** Asymmetrische Folie nach jedem beliebigen der obigen Ansprüche, wobei das LLDPE eine Dichte von unter 920 kg/m$^3$ (ISO 1183) aufweist.

**9.** Asymmetrische Folie nach jedem beliebigen der obigen Ansprüche, wobei das LLDPE-Comonomer Octen ist.

**10.** Asymmetrische Folie nach jedem beliebigen der obigen Ansprüche, wobei die äußere Polypropylen-Schicht frei von Polyethylen ist und die Polyethylen-Versiegelungsschicht frei von Polypropylen ist.

**11.** Asymmetrische Folie nach jedem beliebigen der obigen Ansprüche mit einer weiteren Schicht, die ein Random-Polypropylen-Copolymer umfasst.

**12.** Asymmetrische Folie nach jedem beliebigen der obigen Ansprüche mit 2 oder 3 Schichten.

**13.** Asymmetrische Folie nach jedem beliebigen der obigen Ansprüche, wobei jede Schicht mindestens 20 % der Schichtdicke bildet, vorzugsweise mindestens 25 %.

**14.** Verfahren zur Vorbereitung einer Folie nach Anspruch 1 bis 13, das das Koextrudieren und dann Formblasen mindestens eines Polypropylen-Random-Copolymers umfasst, um so eine äußere Polypropylen-Schicht zu bilden, die frei von Polyethylen ist; und mindestens ein LLDPE mit einer $MFR_2$ von mindestens 2 g/10min umfasst, um so eine äußere Versiegelungsschicht zu bilden;
wobei die Versiegelungsschicht mindestens 18 % der Gesamtdicke der Folie ausmacht.

**Revendications**

1. Film multicouche soufflé asymétrique comprenant au moins deux couches, une couche externe contenant du polypropylène, au moins une couche centrale et une couche d'étanchéité externe ;
dans lequel ladite couche externe de polypropylène est exempte de polyéthylène et comprend au moins un copolymère aléatoire de polypropylène ; et
ladite couche d'étanchéité comprend au moins un LLDPE ayant un débit en fusion $MFR_2$ d'au moins 2 g/10 min (ISO1133) ;
dans lequel au moins 18 % de l'épaisseur totale du film ressortissent à la couche d'étanchéité.

2. Film asymétrique selon l'une quelconque des revendications précédentes, dans lequel le copolymère aléatoire de polypropylène est multimodal.

3. Film asymétrique selon l'une quelconque des revendications précédentes, dans lequel le copolymère aléatoire de polypropylène a un $MFR_2$ de 0,1 à 12 g/10 min.

4. Film asymétrique selon l'une quelconque des revendications précédentes, dans lequel le comonomère du copolymère aléatoire de polypropylène est l'éthylène.

5. Film asymétrique selon l'une quelconque des revendications précédentes, dans lequel le copolymère aléatoire de polypropylène est un copolymère hétérophasique aléatoire.

6. Film asymétrique selon l'une quelconque des revendications précédentes, dans lequel le LLDPE a un poids moléculaire Mp qui est inférieur à 100 000.

7. Film asymétrique selon l'une quelconque des revendications précédentes, dans lequel le LLDPE est fabriqué par catalyse monosite.

8. Film asymétrique selon l'une quelconque des revendications précédentes, dans lequel le LLDPE a une masse volumique de moins de 920 kg/m$^3$ (ISO1183).

9. Film asymétrique selon l'une quelconque des revendications précédentes, dans lequel le comonomère de LLDPE est l'octène.

10. Film asymétrique selon l'une quelconque des revendications précédentes, dans lequel la couche externe de polypropylène est exempte de polyéthylène et la couche d'étanchéité en polyéthylène est exempte de polypropylène.

11. Film asymétrique selon l'une quelconque des revendications précédentes, ayant une autre couche comprenant un copolymère aléatoire de polypropylène.

12. Film asymétrique selon l'une quelconque des revendications précédentes, ayant 2 ou 3 couches.

13. Film asymétrique selon l'une quelconque des revendications précédentes, dans lequel chaque couche forme au moins 20 % en poids de l'épaisseur du film, de préférence au moins 25 %.

14. Procédé de préparation d'un film selon les revendications 1 à 13, comprenant la coextrusion, puis le soufflage d'au moins un copolymère aléatoire de polypropylène de manière à former une couche externe de polypropylène qui est exempte de polyéthylène ; et
au moins un LLDPE ayant un $MFR_2$ d' au moins 2 g/10 min de manière à former une couche d'étanchéité externe ;
dans lequel au moins 18 % de l'épaisseur totale du film ressortissent à la couche d'étanchéité.

Figure 1

30 mm       sealing position

100 mm      clamping position

150 mm      overall length

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 129368 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A
- EP 537130 A
- WO 9613529 A
- WO 03051934 A
- WO 9535323 A
- EP 517868 A